Europäisches Patentamt

European Patent Office

Office européen des brevets

(19)

(11) Veröffentlichungsnummer: **0 243 777**

**A2**

(12) # EUROPÄISCHE PATENTANMELDUNG

(21) Anmeldenummer: 87105463.1

(22) Anmeldetag: 13.04.87

(51) Int. Cl.4: **C08G 18/66** , C08G 18/50 , C08G 18/32 , C08J 9/14

(30) Priorität: 25.04.86 DE 3613973

(43) Veröffentlichungstag der Anmeldung:
04.11.87 Patentblatt 87/45

(84) Benannte Vertragsstaaten:
BE DE ES FR GB IT NL SE

(71) Anmelder: **BAYER AG**
**Konzernverwaltung RP Patentabteilung**
**D-5090 Leverkusen 1 Bayerwerk(DE)**

(72) Erfinder: **Pilger, Friedhelm, Dr.**
**Schillingstrasse 37-39**
**D-5000 Köln 1(DE)**
Erfinder: **Franzen, Reinhold**
**Baumberger Strasse 90**
**D-5090 Leverkusen 1(DE)**
Erfinder: **Reichmann, Wolfgang, Dr.**
**100 Sunnyhill Drive**
**Pittsburgh, PA 15228(US)**

(54) Verfahren zur Herstellung von Polyharnstoffschaum-Formteilen.

(57) Ein neues Verfahren zur Herstellung von Polyharnstoffschaum-Formteilen der Dichte 200 bis 600 kg/m³ mit kompakter Randzone durch Umsetzung in geschlossenen Formen eines Reaktionsgemischs aus

    a) einer Polyisocyanatkomponente,

    b) Verbindungen eines (mittleren) Molekulargewichts von 1800 bis 12 000, welche mindestens zwei gegenüber Isocyanatgruppen reaktionsfähige Gruppen aufweisen,

    c) aromatischen Diaminen des Molekulargewichtsbereichs 108 bis 400,

    d) Treibmitteln und

    e) gegebenenfalls weiteren Hilfs-und Zusatzmitteln, wobei man als Komponente b) Polyether oder Gemische von Polyethern mit (im statistischen Mittel) 2 bis 3 gegenüber Isocyanatgruppen reaktionsfähigen Gruppen, die zu mindestens 90 % aromatisch gebundene, primäre und/oder sekundäre Aminogruppen darstellen und die Komponente c) in einer Menge von maximal 10 Gew.-%, bezogen auf das Gewicht der Komponente b), verwendet.

EP 0 243 777 A2

## Verfahren zur Herstellung von Polyharnstoffschaum-Formteilen

Die Erfindung betrifft ein neues Verfahren zur Herstellung von weichen Polyharnstoffschaum-Formteilen des Dichtebereichs 200 bis 600 kg/m³ durch Umsetzung in geschlossenen Formen von ausgewählten Ausgangsmaterialien mit aromatisch gebundenen Isocyanat-bzw. Aminogruppen.

Die Herstellung von weichen Polyurethanschaum-Formteilen mit kompakter Randzone und integraler Dichteverteilung durch Formverschäumung von Raktionsgemischen auf Basis von organischen Polyisocyanaten, Polyether-und/oder Polyesterpolyolen und niedermolekularen Polyolen als Kettenverlängerungsmitteln ist bekannt (vgl. z.B. Becker/Braun, Kunststoff-Handbuch 7, Polyurethane, Herausgeber Dr. G. Oertel, Carl Hanser Verlag, München, 1983). Ebenfalls bekannt ist die Herstellung von mikrozellularen Formteilen einer über 800 kg/m³ liegenden Dichte unter Mitverwendung von bestimmten aromatischen Diaminen als Kettenverlängerungsmitteln (DE-AS 2 622 951) und/oder unter Verwendung von höhermolekularen Verbindungen mit gegenüber Isocyanatgruppen reaktionsfähigen Gruppen, die zu mindestens 50 % aus primären oder sekundären Aminogrup pen bestehen (EP-A-0 081 701, EP-A-0 093 861, EP-A-0 093 862 oder DE-OS 3 215 909). Aufgrund der Mitverwendung von aminischen Aufbaukomponenten wird in den Kunststoffen die Anzahl an Harnstoffsegmenten erhöht, wodurch eine Verbesserung der mechanischen Eigenschaften der Polyisocyanat-Polyadditionsprodukte möglich ist. Die Herstellung von derartigen Formteilen auf Basis von Harnstoffmodifizierten Polyurethanen bzw. von reinen Polyharnstoffen war bislang jedoch auf die Herstellung von Formteilen einer hohen, d.h. über 800 kg/m³ liegenden Dichte beschränkt. Der Grund hierfür ist in dem Umstand zu sehen, daß die zwischen Isocyanatgruppen und Aminogruppen ablaufende Reaktion im allgemeinen äußerst schnell abläuft, so daß die zur Vernetzung führende Reaktion im wesentlichen bereits abgeschlossen ist, bevor die gegebenenfalls mitverwendeten Treibmittel ihre Treibwirkung entfalten. Daher weisen alle, in den oben zitierten Vorveröffentlichungen konkrekt beschriebenen Formteile eine über 800 kg/m³ liegende Dichte auf. In der DE-OS 3 215 907 und DE-OS 3 215 909 wird in der allgemeinen Beschreibung zwar auch die Herstellung von zellhaltigen Formkörpern einer bevorzugten Dichte von 0,25 bis 0,7 g/cm³ erwähnt, jedoch wurde die Herstellbarkeit derartiger Schaumstoffe aus den gemäß diesen Vorveröffentlichungen einzusetzenden Aminopolyethern mit aliphatisch gebundenen Aminogruppen nicht dokumentiert.

Jetzt wurde überraschenderweise gefunden, daß es durchaus möglich ist, weiche Polyharnstoffschaum-Formteile des Dichtebereichs 200 bis 600 kg/m³ mit stark ausgeprägter Randzone herzustellen, wenn als höhermolekulare Verbin dungen mit gegenüber Isocyanatgruppen reaktionsfähigen Gruppen Polyether verwendet werden, deren gegenüber Isocyanatgruppen reaktionsfähigen Gruppen praktisch ausschließlich aus aromatisch gebundenen Aminogruppen bestehen, und wenn außerdem darauf geachtet wird, daß die Diamin-Kettenverlängerungsmittel in einer Menge von maximal 10 Gew.-%, bezogen auf das Gewicht der genannten Polyether, mitverwendet werden. Die auf diese Weise erstmals zugänglichen Polyharnstoffschaum-Formteile zeichnen sich durch ausgezeichnete mechanische Eigenschaften und eine besonders stark ausgeprägte Randzone aus.

Gegenstand der Erfindung ist ein Verfahren Verfahren zur Herstellung von Polyharnstoffschaum-Formteilen der Dichte 200 bis 600 kg/m³ mit kompakter Randzone durch Umsetzung in geschlossenen Formen eines Reaktionsgemischs aus

a) eine Polyisocyanatkomponente, bestehend aus mindestens einem Di-oder Polyisocyanat mit ausschließlich aromatisch gebundenen Isocyanatgruppen,

b) Verbindung mit einem (mittleren) Molekulargewicht von 1.800 bis 12.000, welche mindestens 2 gegenüber Isocyanatgruppen reaktionsfähige Gruppen aufweisen,

c) Diaminen mit 2 primären und/oder sekundären, aromatisch gebundenen Aminogruppen des Molekulargewichtsbereichs 108 bis 400,

d) Treibmitteln und

e) gegebenenfalls weiteren, aus der Polyurethanchemie an sich bekannten Hilfs-und Zusatzmitteln, wobei die Reaktionspartner unter Einhaltung einer Isocyanat-Kennzahl von 70 bis 130 zur Reaktion gebracht werden, dadurch gekennzeichnet, daß man als Komponente b) Polyether oder Gemische von Polyethern mit (im statistischen Mittel) 2 bis 3 gegenüber Isocyanatgruppen reaktionsfähigen Gruppen, die zu mindestens 90 % aromatischen gebundene, primäre und/oder sekundäre Aminogruppen darstellen und die Komponente c) in einer Menge von maximal 10 Gew.-%, bezogen auf das Gewicht der Komponente b), verwendet.

Bei der beim erfindungsgemäßen Verfahren einzusetzenden Polyisocyanat-Komponente a) handelt es sich um aromatische Di-und/oder Polyisocyanate, d.h. um solche, die ausschließlich aromatisch gebundene Isocyanatgruppen aufweisen. Beispiele für derartige Verbindungen sind 2,4-und/oder 2,6-Diisocyanatotoluol, 2,2'-, 2,4'-und/oder 4,4'-Diisocyanatodiphenylmethan, Gemische dieser letztgenannten Isomeren mit ihren höheren Homologen, wie sie bei der bekannten Phosgenierung von Anilin/Formaldehyd-Kondensaten anfallen, Urethangruppen aufweisende Umsetzungsprodukte der genannten Di-und/oder Polyisocyanate mit unterschüssigen Mengen an aliphatischen Polyhydroxylverbindungen des Molekulargewichtsbereiches 62 bis 700 wie z.B. Ethylenglykol, Trimethylolpropan, Propylenglykol, Dipropylenglykol oder Polypropylenglykolen des genannten Molekulargewihtsbereichs, durch partielle Carbodiimidisierung der Isocyanatgruppen der genannten Di-und/oder Polyiso cyanate modifizierte Di-und/oder Polyisocyanate, Methylsubstituierte Diisocyanate der Diphenylmethanreihe bzw. deren Gemische der beispielsweise in EP-OS 0 024 665 beschriebenen Art oder beliebige Gemische derartiger aromatischer Di-und Polyisocyanate.

Zu den bevorzugten Ausgangsmaterialien a) gehören die bei Raumtemperatur flüssigen Derivate des 4,4'-Diisocyanatdiphenylmethans, beispielsweise die Urethangruppen aufweisenden Polyisocyanate, die gemäß DE-PS 1 618 380 (US-PS 3 644 457) durch Umsetzung von 1 Mol 4,4'-Diisocyanatodiphenylmethan mit 0,05 bis 0,3 Molen an niedermolekularen Diolen oder Triolen, vorzugsweise Polypropylenglykolen mit einem unter 700 liegenden Molekulargewicht, zugänglich sind, oder Carbodiimid-und/oder Urethonimingruppen aufweisende Diisocyanate auf Basis von 4,4'-Diisocyanatodiphenylmethan, wie sie beispielsweise gemäß US-PS 3 152 162, US-PS 3 384 653, US-PS 3 449 256, DE-OS 2 537 685 oder EP-OS 5233 zugänglich sind. Auch die entsprechenden Modifizierungsprodukte auf Basis von Gemischen aus 2,4'-und 4,4'-Diisocyanatodiphenylmethan oder auch Gemische der wie beschrieben modifizierten 4,4'-Diisocyanatodiphenylmethane mit untergeordneten Mengen an höher als difunktionellen Polyisocyanaten der Diphenylmethanreihe, beispielsweise solche der in DE-OS 2 624 526 beschriebenen Art gehören zu den bevorzugten Polyisocyanaten. Im allgemeinen handelt es sich bei den bevorzugten, erfindungsgemäß einzusetzenden Polyisocyanaten um bei Raumtemperatur flüssige, gegebenenfalls wie beschrieben chemisch modifizierte Polyisocyanate bzw. Polyisocyanatgemische der Diphenylmethanreihe einer (mittleren) NCO-Funktionalität von 2 bis 2,2, insbesondere von 2. Besonders bevorzugt werden Polyisocyanatgemische der Diphenylmethanreihe der beispielhaft genannten Art eingesetzt, die einen Gehalt an freiem 2,4'-Diisocyanatodiphenylmethan von 25 bis 65 Gew.-% aufweisen.

Bei der erfindungswesentlichen Komponente b) handelt es sich um Polyether oder Gemische von Polyethern, die (im statistischen Mittel) 2 bis 3, vorzugsweise endständig angeordnete, gegenüber Isocyanatgruppen reaktionsfähige Gruppen aufweisen, wobei es sich bei diesen Gruppen zumindest zu 90 %, vorzugsweise ausschließlich um aromatisch gebundene, primäre oder sekundäre, vorzugsweise primäre Aminogruppen handelt. Die Polyether weisen im übrigen ein (aus der Funktionalität und dem Gehalt an gegenüber Isocyanatgruppen reaktionsfähigen Gruppen errechenbares) Molekulargewicht von 1.800 bis 12.000, vorzugsweise 2.000 bis 8.000 auf.

Neben den erfindungswesentliche, aromatisch gebundenen Aminogruppen können die Polyether insbesondere noch geringe Mengen an primären und/oder sekundären, vorzugsweise primären Hydroxylgruppen aufweisen. Die Anzahl dieser Hydroxylgruppen darf jedoch nicht höher als 10 %, bezogen auf die Gesamtanzahl der gegenüber Isocyanatgruppen reaktionsfähigen Gruppen liegen. Die Anwesenheit von derartigen Hydroxylgruppen kann sowohl darauf zurückzu führen sein, daß die Umwandlung von Polyetherpolyolen in Polyether mit aromatisch gebundenen Aminogruppen nur unvollständig durchgeführt wurde oder auch darauf, daß in der Komponente b) neben den Polyethern mit ausschließlich aromatisch gebundenen Aminogruppen noch geringe Mengen an Polyetherpolyolen vorliegen.

Grundsätzlich ist es jedoch auch möglich, jedoch keinesfalls bevorzugt, neben den erfindungswesentlichen Polyethern mit aromatisch gebundenen Aminogruppen Polyether oder Polyester mit aliphatisch gebundenen Aminogruppen mitzuverwenden, jedoch nur unter Beachtung der genannten erfindungswesentlichen Bedingung, daß die gegenüber Isocyanatgruppen reaktionsfähigen Gruppen der Komponente b) zumindest zu 90 % aus aromatisch gebundenen Aminogruppen bestehen.

Die erfindungswesentlichen, aromatischen Aminopolyether stellen oftmals Gemische unterschiedlicher Polyetherpolyamine dar, so daß sich die gemachten Angaben bezüglich des Molekulargewichts und der Funktionalität der Komponente b) im Falle der Verwendung derartiger Gemische auf den statistischen Mittelwert beziehen.

In den erfindungsweisentlichen Polyethern mit aromatisch gebundenen Aminogruppen können die Aminogruppen tragenden, vorzugsweise endständigen Rest mit der Polyetherkette über Urethan-oder Estergruppen verknüpft sein. Die Herstellung dieser "Aminopolyether" erfolgt in an sich bekannter Weise, beispielsweise nach den Verfahren, die in EP-A-79 536, DE-A-2 948 419, DE-A-2 019 432, DE-A-2 619 840, US-PS 3 808 250, US-PS 3 975 428 oder US-PS 4 016 143 beschrieben sind.

Bei der bei dem erfindungsgemäßen Verfahren einzusetzenden Komponente c), handelt es sich um Diamine mit ausschließlich aromatisch gebundenen, primären oder sekundären, vorzugsweise primären Aminogruppen des Molekulargewichtsbe reichs 108 bis 400. Vorzugsweise handelt es sich bei diesen Diaminen um solche, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 4, vorzugsweise 1 bis 3 Kohlenstoffatomen aufweisen, besonders bevorzugt sind solche, die in jeweils mindestens einer ortho-Stellung zu den Aminogruppen einen Ethyl-, n-Propyl-und/oder Iso-propyl-Substituenten und gegebenenfalls in weiteren ortho-Stellungen zu den Aminogruppen Methylsubstituenten aufweisen. Beispiele derartiger Diamine sind 1-Methyl-3,5-diethyl-2,4-diaminobenzol, dessen technische Gemische mit 1-Methyl-3,5-diethyl-2,6-diaminobenzol, die im allgemeinen bis zu 35 Gew.-%, bezogen auf Gemisch, des letztgenannten Isomeren enthalten, 3,5,3',5'-Tetraisopropyl-4,4'-diaminodiphenylmethan, 3,3'-Diethyl-4,4'-diaminodiphenylmethan oder beliebige Gemisch derartiger Diamine. Weitere geeignete Diamine sind beispielsweise die in DE-OS 3 147 736 bei der Beschreibung der Komponente c) beispielhaft genannten Diamine oder die in EP-A-0 069 286 aufgelisteten aromatischen Diamine.

Die Diamine c) kommen beim erfindungsgemäßen Verfahren in einer Menge von maximal 10 Gew.-%, d.h. im allgemeinen in einer Menge von 2 bis 10, vorzugsweise 2 bis 6 Gew.-%, bezogen auf das Gewicht der Komponente b) zum Einsatz. Vor der Durchführung des erfindungsgemäßen Verfahrens wird die Komponente c) vorzugsweise in der der Komponente b) zu der beim erfindungsgemäßen Verfahren einzusetzenden "Polyaminkomponente" gelöst.

Bei den beim erfindungsgemäßen Verfahren mitzuverwendenden Treibmitteln d) handelt es sich vorzugsweise um die aus der Polyurethanschaumchemie bekannten "physikalischen Treibmittel", d.h. um inerte, leicht verdampfende Verbindungen wie z.B. Aceton, Ethylacetat, Methylenchlorid, Chloroform, Ethylidenchlorid, Vinylidenchlorid, Monofluortrichlormethan, Chlordifluormethan, Dichlordifluormethan, Butan, Hexan, Heptan oder Diethylether. Vorzugsweise werden die genannten, fluorierten Chlorkohlenwasserstoffe eingesetzt.

Geeignete Treibmittel d) sind auch inerte Gase wie z.B. Stickstoff oder Luft, die beispielsweise dem Reaktionsgemisch bei dessen Herstellung durch Mischen der Einzelkomponenten mittels eines getrennten Gasstroms einverleibt werden können. Geeignete Treibmittel d) sind auch Verbindungen, die bei über Raumtemperatur liegenden Temperaturen Gase abspalten, beispielsweise Stickstoff abspaltende Azoverbindungen wie Azoisobuttersäurenitril. Weitere Beispiele für erfindungsgemäße Treibmittel d) sind beispielsweise in "Kunststoffhandbuch", Bd. VII, herausgegeben von Vieweg & Höchtlen, Carl-Hanser-Verlag, München 1966, S. 108, 109, 453-455 und 507-510 beschrieben.

Die vorzugsweise beim erfindungsgemäßen Verfahren einzusetzenden "physikalischen Treibmittel", d.h. die oben beispielhaft genannten leicht siedenden Flüssigkeiten werden vorzugsweise bei der Durchführung des erfindungsgemäßen Verfahrens der "Polyaminkomponente", die ihrerseits aus einer Lösung der Komponente c) in der Komponente b) besteht, zugemischt. Es ist jedoch auch möglich, die Treibmittel der Polyisocyanatkomponente a) einzuverleiben.

Zu den gegebenenfalls beim erfindungsgemäßen Verfahren mitzuverwendenden Hilfs-und Zusatzmittel e) gehören beispielsweise die an sich bekannten "inneren Formtrennmittel" des Standes der Technik, wie sie beispielsweise in DE-OS 1 953 637 (= US-PS 3 726 952), DE-OS 2 121 670 (= GB-PS 1 365 215), DE-OS 2 431 968 (= US-PS 4 098 731) bzw. in DE-OS 2 404 310 (= US-PS 4 058 492) beschrieben sind. Zu den bevorzugten Trennmitteln gehören somit die mindestens 25 aliphatische Kohlenstoffatome aufweisenden Salze von Fettsäuren mit mindestens 12 aliphatischen Kohlenstoffatomen und primären Mono-, Di-oder Polyaminen mit zwei und mehr Kohlenstoffatomen oder Amid-oder Estergruppen ausweisenden Aminen, die mindestens eine primäre, sekundäre oder tertiäre Aminogruppe besitzen, gesättigte und/oder ungesättigte COOH-und/oder OH-Gruppen aufweisende Ester von monon-und/oder polyfunktionellen Carbonsäuren und polyfunktionellen Alkoholen mit Hydroxyl-oder Säurezahlen von mindestens 5, esterartige Umsetzungsprodukte aus Ricinolsäure und langkettigen Fettsäuren, Salze aus Carbonsäuren und tertiären Aminen sowie natürliche und/oder synthetische Öle, Fette oder Wachse. Besonders bevorzugt ist das Ölsäure-oder Tallölfettsäuresalz des amidgruppenhaltigen Amins, das durch Umsetzung von N-Dimethylaminopropylamin mit Ölsäure oder Tallölfettsäure erhalten worden ist.

Neben diesen beispielhaft genannten, bevorzugt einzusetzenden Trennmitteln können prinzipiell beim erfindungsgemäßen Verfahren auch andere an sich bekannte Trennmittel des Standes der Technik allein oder im Gemisch mit den bevorzugten, beispielhaft genannten Trennmitteln eingesetzt werden. Zu diesen weiterhin geeigneten Trennmitteln gehören beispielsweise die Umsetzungsprodukte aus Fettsäureestern und Polyisocyanaten gemäß DE-OS 2 319 648, die Umsetzungsprodukte aus reaktionsfähige Wasserstoffatome aufweisenden Polysiloxanen mit Mono-und/oder Polyisocyanaten gemäß DE-OS 2 356 692 (= US-PS 4 033 912), Ester von Hydroxymethylgruppen aufweisenden Polysiloxanen mit Mono-und/oder Polycarbonsäuren gemäß DE-OS 2 363 452 (= US-PS 4 024 090) und Salze aus Aminogruppen enthaltenden Polysiloxanen und Fettsäuren gemäß DE-OS 2 427 273 oder DE-OS 2 431 968 (US-PS 4 098 731).

Die gennanten internen Formtrennmittel werden, falls überhaupt, in einer Menge von insgesamt 0,1 bis 24 Gew.-%, vorzugsweise 1 bis 10 Gew.-%, bezogen auf das gesamte Reaktionsgemisch, eingesetzt.

Obwohl für die Herstellung von weichen Polyharnstoff-Integralschaum-Formteilen aus den Komponenten a) bis d) und darüber hinaus bei Einsatz der bevorzugten Formtrennmittel e) keine Katalysatoren für die Reaktion zwischen Isocyanat-und gegenüber Isocyanatgruppen reaktionsfähigen Gruppen der Komponenten b) und c) eingesetzt werden müssen, können die Katalysatoren, die in bekannter Weise bei der Herstellung von Polyurethanschaumstoffen und mikrozellularen Elastomeren eingesetzt werden, als weitere Hilfs-bzw. Zusatzmittel e) mitverwendet werden.

Als gegebenenfalls mitzuverwendende Katalysatoren kommen tertiäre Amine der an sich bekannten Art infrage, z.B.:

Triethylamin, Tributylamin, N-Methyl-morpholin, N-Ethyl-morpholin, N-Cocomorpholin, N,N,N′,N′-Tetra-methylethylendiamin, 1,4-Diazabicyclo-(2,2,2)-octan, N-Methyl-N′-dimethylaminoethylpiperazin, N,N-Dime-thylbenzylamin, Bis-(N,N-diethylaminoethyl)-adipat, N,N-Diethylbenzylamin, Pentamethyldiethylentriamin, N,N-Dimethylcyclohexylamin, N,N,N′,N′-Tetramethyl-1,3-butandiamin, N,N-Dimethylimidazol-ß-phenylethylamin, 1,2-Dimethylimidazol und 2-Methyl-imidazol.

Auch organische Metallkatalysatoren, insbesondere organische Zinnkatalysatoren, wie z.B. Zinn-(II)-salze von Carbonsäuren wie Zinn-(II)-acetat, Zinn-(II)-octoat, Zinn-(II)-ethylhexoat und Zinn-(II)-laurat und die Dialkylkzinnsalze von Carbonsäuren, wie z.B. Dibutylzinndiacetat, Dibutyl-zinndilaurat, Dibutyl-zinnmaleat oder Dioctylzinn diacetat können allein oder in Kombination mit den tertiären Aminen verwendet werden. Weitere Vertreter von Katalysatoren sowie Einzelheiten über die Wirkungsweise der Katalysatoren sind im Kunststoff-Handbuch, Band VII, herausgegeben von Vieweg & Höchtlen, Carl-Hanser-Verlag, München 1966, z.B. auf den Seiten 96 bis 102 beschrieben.

Die Katalysatoren werden, falls überhaupt, in einer Menge von etwa 0,001 und 10 Gew.-%, vorzugsweise 0,05 bis 1 Gew.-%, bezogen auf die Komponente b), eingesetzt.

Erfindungsgemäß können auch oberflächenaktive Zusatzstoffe als weitere Komponente e) (Emulgatoen und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diethylamin oder stearinsaures Diethanolamin infrage. Auch Alkali-oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der US-PS 2 764 565 beschrieben.

Als weitere Hilfs-und Zusatzmittel e), die gegebenenfalls beim erfindungsgemäßen Verfahren mitverwendet werden, seien auch Zellregler der an sich bekannten Art, wie z.B. Paraffine oder Fettalkohole oder Dimethylpolysiloxane, sowie Pigmente oder Farbstoffe und Flammschutzmittel der an sich bekannten Art, z.B. Tris-chlorethylphosphat oder Ammoniumphosphat und -polyphosphat, ferner Stabilisatoren gegen Alterungs-und Witterungseinflüsse, Weichmacher und fungistatisch und bakteriostatisch wirkende Substanzen sowie Füllstoffe wie Bariumsulfat, Glasfaser, Kieselgur oder Schlämmkreide genannt.

Weitere Beispiele von gegebenenfalls erfindungsgemäß mitzuverwendenden oberflächenaktiven Zusatzstoffen und Schaumstabilisatoren, flammhemmenden Substanzen, Weichmachern, Farbstoffen und Füllstoffen, fungistatisch und bakteriostatisch wirksamen Substanzen sowie Einzelheiten über Verwendungs-und Wirkungswiese dieser Zusatzmittel sind im Kunststoff-Handbuch, Band VII, herausgegeben von Vieweg & Höchtlen, Carl-Hanser-Verlag, München 1966, z.B. auf den Seiten 103 bis 113, beschrieben.

Die gegebenenfalls mitzuverwendenden Hilfs-und Zusatzmittel e) werden vorzugsweise der "Polyaminkomponente" einverleibt.

Bei der Durchführung des erfindungsgemäßen Verfahrens wird die Menge der Polyisocyanatkomponente vorzugsweise so bemessen, daß im schaumfähigen Gemisch eine Isocyanat-Kennzahl von 70 bis 130, insbesondere 90 bis 110, vorliegt. Unter Isocyanat-Kennzahl versteht man hierbei den Quotienten aus Anzahl der Isocyanatgruppen und Anzahl der gegenüber Isocyanaten reaktiven Gruppen, multipliziert mit 100. In die Berechnung der Isocyanat-Kennzahl gehen hierbei die gegebenenfalls in den Trennmitteln vorliegenden, gegenüber Isocyanatgruppen reaktionsfähigen Gruppen (Carboxylgruppen) nicht ein. Bei der Durchführung des erfindungsgemäßen Verfahrens wird vorzugsweise nach der bekannten Reaktionsspritzgußtechnik (RSG-Verfahren) gearbeitet, obwohl es grundsätzlich auch möglich ist, die Durchmischung der Reaktionspartner auch auf andere Weise durchzuführen, beispielsweise mittels hochwirksamer Laboratoriumsrührer. Es kommen, unabhängig von der Art der Durchmischung, im allgemeinen zwei Reaktionskomponenten zum Einsatz, wobei die Polyisocyanatkomponente a) die erste und die "Polyamin-Komponente", d.h. das Gemisch der Komponenten b), c) und d) die zweite Reaktionskomponente darstellen. Die gegebenenfalls mitzuverwendenden Komponenten e) werden, wie bereits oben ausgeführt, im allgemeinen der "Polyamin-Komponente" zugemischt, jedoch kann es auch zweckmäßig sein, beispielsweise bei der Verwendung von Isocyanatgruppen aufweisenden Trennmitteln, diese vor der Durchführung des erfindungsgemäßen Verfahrens der Polyisocyanatkomponente einzuverleiben. Grundsätzlich ist es selbstverständlich auch möglich, solche Mischköpfe zu verwenden, die den Einsatz von drei oder vier getrennten Komponenten bei der Durchführung des erfindungsgemäßen Verfahrens gestatten, so daß eine Vormischung der Einzelkomponenten nicht erforderlich ist. Die Menge des in die Form eingebrachten Gemischs aund der Gehalt dieses Gemischs an Treibmittel d) werden so bemessen, daß die Formkörper eine Dichte von 200 bis 600 kg/m³ aufweisen.

Als Ausgangstemperatur des in die Form eingebrachten Gemischs wird im allgemeinen eine Temperatur zwischen 20°C und 50°C gewählt. Die Temperatur der Form beträgt im allgemeinen 20°C bis 80°C, vorzugsweise 40°C bis 60°C.

Die erfindungsgemäßen Verfahrensprodukte können im allgemeinen nach einer Formstandzeit von 2 bis 10 Minuten, vorzugsweise 2 bis 5 Minuten, entformt werden. Die resultierenden Formkörper zeichnen sich durch ausgezeichnete mechanische Eigenschaften und eine ausgeprägte, massive Randzone aus. Sie eignet sich insbesondere zur Herstellung von Sitzpolstern, Abpolsterungen, Armlehnen, weichen Griffen, Stoßkanten, Verpackungen, Fahrzeugsicherheitsteilen, Armaturenteilen, Kniepolstern, Stoßfängern, Schuhen, Helmen, Schutzhüllen, Boxhandschuhen und Teilen davon.

## Beispiele

In den nachfolgenden Beispielen werden folgende Abkürzungen verwendet:

### Polyol I

Polyetherpolyol der OH-Zahl 56, hergestellt durch Propoxylierung von Trimethylolpropan und anschließende Ethoxylierung des Propoxylierungsprodukts (Gewichtsverhältnis PO/EO = 45:55).

### Polyol II

Polyetherpolyol der OH-Zahl 28, hergestellt durch Propoxylierung von Trimethylolpropan und Ethoxylierung des Propoxylierungsproduktes (Gewichtsverhältnis PO/EO = 75:25).

### Polyamin I

Aromatisches Aminopolyether-Gemisch der mittleren NH-Funktionalität 2,5 und der mittleren NH-Zahl 47,4 hergestellt durch Hydrolyse eines gedünnschichteten NCO-Prepolymeren, aus einem Polyetherpolyol der OH-Zahl 49 und überschüssigem 2,4-Diisocyanatotoluol. Bei dem Polyetherpolyol handelt es sich um ein Alkoxylierungsprodukt eines äquimolaren Gemischs von Trimethylolpropan und Propylenglykol. Das Startergemisch wurde zunächst propoxyliert und anschließend das Propoxylierungsprodukt ethoxyliert (Gewichtsverhältnis PO:EO = 95:5).

### Polyamin II

Aromatischer Aminopolyether der NH-Funktionalität 3 und der NH-Zahl 27,5, hergestellt durch Hydrolyse eines gedünnschichteten NCO-Prepolymeren aus propoxyliertem Trimethylolpropan der OH-Zahl 32 und überschüssigem 2,4-Diisocyanatotoluol.

## Polyamin III

Polypropylenproxid-polyether mit endständigen aliphatischen Aminogruppen, hergestellt durch Aminierung der endständigen Hydroxylgruppen von Polypropylenglykol, NH-Funktionalität = 2, NH-Zahl = 56.

## Kettenverlängerer I

Mischung aus 70 Gew.-% 1-Methyl-3,5-diethyl-2,4-diaminobenzol und 30 Gew.-% 1-Methyl-3,5-diethyl-2,6-diaminobenzol.

## Kettenverlängerer II

Diamingemisch, bestehend im wesentlichen aus 60 Gew.-Teilen 3,5-Diethyl-3',5'-diisopropyl-4,4'-diaminodiphenylmethan, 20 Gew.-Teilen 3,5,3',5'-Tetraethyl-4,4'-diaminodiphenylmethan und 20 Gew.-Teilen 3,5,3',5'-Tetraisopropyl-4,4'-diaminodiphenylmethan, hergestellt durch Kondensation eines äquimolaren Gemischs aus 2,6-Diethyl-und 2,6-Diisopropyl-anilin mit Formaldehyd unter Einhaltung eines Mol verhältnisses der Aniline zu Formaldehyd von ca. 2:1 und anschließende destillative Isolierung des Diamingemischs aus dem Reaktionsgemisch.

## Sabilisator

Handelsüblicher Polyetherpolysiloxan-Stabilisator ("Stabilisator L 5305" der Union Carbide).

## R 11

Monofluortrichlormethan.

## Katalysator

30 %ige Lösung von Triethylendiamin in Dipropylenglykol.

## Polyisocyanat I

Gemisch aus 50 Gew.-Teilen 2,4'-und 50 Gew.-Teilen 4,4'-Diisocyanatodiphenylmethan.

## Polyisocyanat II

Urethanmodifiziertes Polyisocyanatgemisch einer mittleren NCO-Funktionalität von 2,2 mit einem NCO-Gehalt von 28,5 Gew.-%, hergestellt durch Umsetzung von Polypropylenglykol des mittleren Molekulargewichts 218 mit einem Polyisocyanatgemisch bestehend aus 75 Gew.-Teilen 4,4'-Diisocyanatodiphenylmethan, 4 Gew.-Teilen 2,4'-Diisocyanatodiphenylmethan und 21 Gew.-Teilen an höherkernigen Polyisocyanaten der Diphenylmethanreihe.

Zur Durchführung der nachstehend tabellarisch zusammengefaßten Beispiele wurden die in der nachstehenden Tabelle angegebenen Ausgangsmaterialien A zunächst zu den entsprechenden "Polyamin-Komponenten" vereinigt, wobei die Beispeile 1 bis 5 Vergleichsbeispiele darstellen, in denen anstelle eines höhermolekularen Polyamins ein höhermolekulares Polyol zum Einsatz gelangte. In den Beispielen 1, 2, 3, 4, 5, 6, 10, 11 und 12 wurden zu den so hergestellten "Polyamin-Komponenten" unter intensivem Rühren mittels eines Laboratoriumsrührers die in der Tabelle angegebenen Polyisocyanate unter Einhaltung der in der Tabelle angegebenen NCO-Kennzahlen hinzugegeben. Unmittelbar nach der Herstellung der Reaktionsgemische, die eine Temperatur von ca. 25°C aufweisen, wurden diese in verschließbare Aluminiumformen der Abmessung 20 x 20 x 3 cm eingetragen, deren Temperatur bei ca. 60°C gehalten wurde, und deren Innenwände mit einem Formtrennmittel (Acmosil® 180 ST 5 der Firma Acmos, Bremen) beschichtet wurden. Die Menge des in die Formen eingetragenen Reaktionsgemischs wurde jeweils so bemessen, daß Formkörper einer Dichte von 400 kg/m³ resultierten. In den Beispielen 7, 8 und 9 wurde zur Durchmischung der Reaktionskomponenten eine Hochdruckdosieranlage (HK 45, Mischkopf MQ 12 der Firma Hennecke, Bundesrepublik Deutschland) verwendet. Im Falle dieser Maschinenversuche betrug die Temperatur der "Polyamin-Komponente" 45°C, die Temperatur der Polyisocyanatkomponente 25°C, die Temperatur der Form 50°C. Bezüglich der übrigen Maßnahmen entsprechen die Maschinenversuche den obengenannten Laborversuchen. Die Formkörper wurden jeweils nach einer Formstandzeit von 5 Minuten entformt. Es resultierten im Falle der erfindungsgemäßen Beispiele 6 bis 12 jeweils geschäumte, weiche Formkörper, die eine besonders ausgeprägte Oberflächenschicht aufweisen.

Die Vergleichsbeispiele 1 bis 4 zeigen, daß es unter Verwendung von Polyetherpolyolen zusammen mit niedermolekularen aromatischen Diamen nicht möglich ist, geschäumte Materialien einer niedrigen Rohdichte zu erhalten. Das Vergleichsbeispiel 5 zeigt, daß ein aliphatischer Aminopolyether in Kombination mit einem aromatischen Diamin zu schnell reagiert, so daß das Treibmittel seine Wirkung nicht entfalten kann, d.h. das Reaktionsgemisch eignet sich nicht zur Herstellung eines Schaumstoffs.

| Beispiel Nr. | | 1 | 2 | 3 | 4 | 5 | 6 | 7 | 8 | 9 | 10 | 11 | 12 |
|---|---|---|---|---|---|---|---|---|---|---|---|---|---|
| Polyol I | GT | 94 | 94 | - | - | - | - | - | - | - | - | - | - |
| Polyol II | GT | - | - | 94 | 94 | - | - | - | - | - | - | - | - |
| Polyamin I | GT | - | - | - | - | - | 90 | 94 | 96 | 98 | 94 | - | - |
| Polyamin II | GT | - | - | - | - | - | - | - | - | - | - | 96 | 90 |
| Polyamin III | GT | - | - | - | - | 98 | - | - | - | - | - | - | - |
| Kettenverlängerer I | GT | 6 | - | 6 | - | 2 | 10 | 6 | 4 | 2 | - | 4 | 10 |
| Kettenverlängerer II | GT | - | 6 | - | 6 | - | - | - | - | - | 6 | - | - |
| Stabilisator | GT | 0,2 | 0,2 | 0,2 | 0,2 | 0,2 | 0,2 | 0,2 | 0,2 | 0,2 | 0,2 | 0,2 | 0,2 |
| Katalysator | GT | - | - | - | - | - | - | - | - | - | - | 0,5 | - |
| Wasser | GT | - | - | - | - | 0,3 | 0,3 | 0,3 | 0,3 | 0,3 | - | 0,3 | 0,3 |
| R 11 | GT | 15 | 15 | 15 | 15 | 15 | 15 | 15 | 15 | 15 | 15 | 15 | 15 |
| Polyisocyanat I | GT | - | - | - | - | 20,2 | 29 | 23,5 | 21 | 18 | 17,5 | 16,5 | 25 |
| Polyisocyanat II | GT | 25 | 17 | 17,4 | 12,5 | - | - | - | - | - | - | - | - |
| NCO-Kennzahl | | 105 | 105 | 105 | 105 | 105 | 105 | 105 | 105 | 105 | 105 | 105 | 105 |
| Start-/Abbindezeit | s | -[+] | -[+] | -[+] | -[+] | ++ | 6/26 | 3/35 | 5/45 | 7/100 | 15/50 | 10/28 | 7/24 |

A { (Polyol I ... R 11)

GT = Gewichtsteile

[+] schäumen nicht, es werden keine homogenen Reaktionsprodukte erhalten

[++] schäumt nicht, die Abbindezeit liegt bei ca. 1s

**Ansprüche**

1. Verfahren zur Herstellung von Polyharnstoffschaum-Formteilen der Dichte 200 bis 600 kg/m³ mit kompakter Randzone durch Umsetzung in geschlossenen Formen eines Reaktionsgemischs aus

a) eine Polyisocyanatkomponente, bestehend aus mindestens einem Di-oder Polyisocyanat mit ausschließlich aromatisch gebundenen Isocyanatgruppen,

b) Verbindung mit einem (mittleren) Molekulargewicht von 1.800 bis 12.000, welche mindestens 2 gegenüber Isocyanatgruppen reaktionsfähige Gruppen aufweisen,

c) Diaminen mit 2 primären und/oder sekundären, aromatisch gebundenen Aminogruppen des Molekulargewichtsbereichs 108 bis 400,

d) Treibmitteln und

e) gegebenenfalls weiteren, aus der Polyurethanchemie an sich bekannten Hilfs-und Zusatzmitteln,

wobei die Reaktionspartner unter Einhaltung einer Isocyanat-Kennzahl von 70 bis 130 zur Reaktion gebracht werden, dadurch gekennzeichnet, daß man als Komponente b) Polyether oder Gemische von Polyethern mit (im statistischen Mittel) 2 bis 3 gegenüber Isocyanatgruppen reaktionsfähigen Gruppen, die zu mindestens 90 % aromatisch gebundene, primäre und/oder sekundäre Aminogruppen darstellen und die Komponente c) in einer Menge von maximal 10 Gew.-%, bezogen auf das Gewicht der Komponente b), verwendet.

2. Verfahren gemäß Anspruch 1, dadurch gekennzeichnet, daß man die Komponente c) in einer Menge von 2 bis 6 Gew.-%, bezogen auf das Gewicht der Komponente b) verwendet.